# FASCICULE DE BREVET EUROPEEN

(11) **EP 3 337 756 B1**
(45) Date de publication et mention de la délivrance du brevet: **30.09.2020**
(21) Numéro de dépôt: 16763917.8
(22) Date de dépôt: 17.08.2016
(51) Int. Cl.: C01B 3/38

(54) **PROCÉDÉ DE PRODUCTION DE GAZ DE SYNTHÈSE AU MOYEN DE RÉACTEURS DE VAPOREFORMAGE**
VERFAHREN ZUR HERSTELLUNG VON SYNTHESEGAS MITTELS DAMPFREFORMIERUNGSREAKTOREN
PROCESS FOR THE PRODUCTION OF SYNTHESIS GAS USING STEAM REFORMING REACTORS

(30) Priorité: 18.08.2015 FR 1557785
(43) Date de publication de la demande: 27.06.2018
(73) Titulaire: L'Air Liquide Société Anonyme pour l'Etude et l'Exploitation des Procédés Georges Claude, 75007 Paris (FR)
(72) Inventeur: FLIN, Matthieu, 78350 Les Loges-En-Josas (FR); VALENTIN, Solène, 78350 Les Loges-En-Josas (FR); FUENTES, François, 78110 Le Vesinet (FR); WAGNER, Marc, 94100 Saint Maur des Fosses (FR); SANIEZ, Quentin, 69320 Feyzin (FR)
(74) Mandataire: Debecker, Isabelle Virginie
(86) Numéro de dépôt international: PCT/FR2016/052086
(87) Numéro de publication internationale: WO 2017/029452

(56) Documents cités:
- EP-A2- 1 767 492
- WO-A1-2006/027175
- WO-A1-2010/122031
- US-A- 5 925 328

## Description

La présente invention est relative à un procédé de production de gaz de synthèse au moyen de réacteurs de vaporeformage, de préférence des échangeurs- réacteurs millistructurés.

WO 2010/122031 divulgue un procédé de reformage dans des réacteurs millistructurés.

Actuellement le procédé le plus répandu de production de gaz de synthèse est le vaporeformage du méthane. Cette réaction est catalytique et endothermique. La chaleur nécessaire pour la réaction est obtenue par combustion dans un four radiatif. Le gaz de synthèse est donc obtenu à haute température (aux environs de 900°C). Une optimisation déjà largement répandue propose le déroulement de la réaction dans un échangeur-réacteur millistructuré afin d'améliorer les transferts de chaleur et de matière au sein du réacteur,

Le réacteur de reformage décrit dans cette invention est un assemblage de plaques ou d'étages constituées de canaux millimétriques. Un module élémentaire de ce réacteur est composé de deux plaques ou étages où un gaz chaud circule afin d'apporter la chaleur nécessaire à la réaction (étages d'apport de chaleur). Entre ces deux plaques / étages, sont placées deux plaques/étages de réaction qui sont recouverts de catalyseurs et où se déroute la réaction.

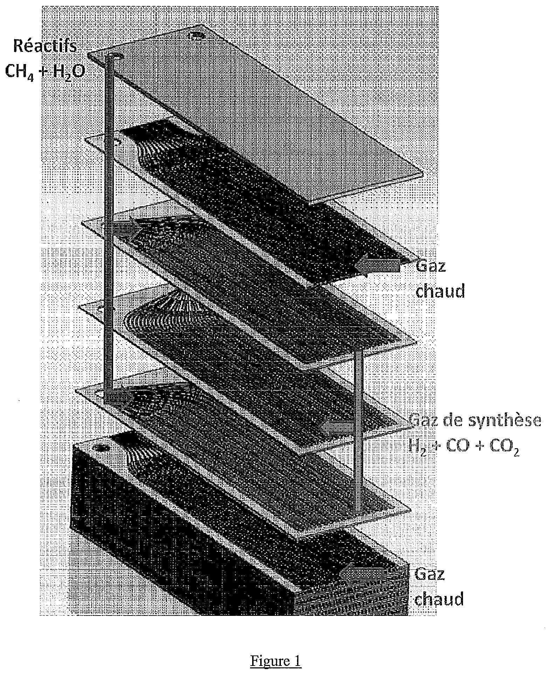

Entre ces deux plaques/étages de réaction, est placée une plaque / étage de « produits », où le gaz de synthèse produit circule en apportant de la chaleur à la réaction. La présence d'une plaque/étage de « produits » représente une conception spécifique de l'équipement pour augmenter la récupération de chaleur sur l'ensemble du procédé. Cette conception peut être différente selon les besoins du procédé, le principe étant de respecter une alternance de plaques ou d'étages d'apport de chaleur et de plaques ou d'étages de réaction (figure 1).

Si la conception du réacteur comprend des plaques / étages de « produits » le passage des deux plaques / étages de réaction vers les plaques / étages de « produits » se fait via des ouvertures situées à l'extrémité des plaques / étages de réaction et des plaques / étages de « produits » permettant de récolter dans un canal des plaques / étages de « produits », le flux d'un canal de la plaque / étage de réaction situé au dessus de la plaque / étage de « produits » et le flux d'un canal de la plaque / étage de réaction situé en dessous de la plaque / étage de « produits ».

Dans la suite de la description, par souci de simplification, on parlera d' « étages » pour tout type d'échangeur-réacteur c'est-à-dire pour les échangeurs-réacteurs présentant des plaques et des interfaces d'assemblage entre les plaques et pour les échangeurs-réacteurs qui sont des pièces monolithiques, c'est-à-dire des pièces ne présentant pas d'interfaces d'assemblages entre les étages. Une telle pièce monolithique peut-être obtenue par méthode additive.

Le gaz chaud qui apporte la chaleur nécessaire à la réaction est produit par combustion.

La présente invention se propose de fournir un procédé amélioré de production de gaz de synthèse.

Une solution de la présente invention est un procédé de production de gaz de synthèse mettant en œuvre au moins un premier et un second réacteurs de vaporeformage tel que défini dans la revendication 1.

Notons que le premier et le second réacteurs de vaporeformage peuvent être chacun remplacés par un ensemble de réacteurs chaque ensemble pouvant comprendre plusieurs réacteurs de vaporeformage en parallèle.

Selon le cas le procédé selon l'invention peut présenter une ou plusieurs des caractéristiques suivantes :
- à l'étape d) les fumées de combustion sont refroidies à une température inférieure à 900°C
- à l'étape d) les fumées de combustion sont refroidies par dilution avec des fumées plus froides que les fumées de combustion récupérées en aval du au moins premier réacteur de vaporeformage et /ou avec de l'air de dilution.
- les fumées plus froides que les fumées de combustion ont subi un refroidissement par production de vapeur.
- à l'étape d) le refroidissement des fumées de combustion s'effectue par dilution de 0 à 80 % avec des fumées plus froides que les fumées de combustion récupérées en aval du au moins premier réacteur de vaporeformage et de 0 à 80 % avec de l'air de dilution
- à l'étape c) les fumées de combustion sont produites au moyen d'au moins un brûleur.
- à l'étape c) les fumées de combustion sont produites au moyen un premier et un second brûleur, le premier brûleur générant les fumées de combustion pour le premier réacteur de vaporeformage et le second brûleur générant les fumées de combustion pour le second réacteur de vaporeformage. Notons que par « brûleur » on entend un brûleur ou une chambre de combustion comprenant plusieurs brûleurs selon la taille de l'installation envisagée.
- les fumées de combustion des étapes c), d) et e) correspondent à celles générées par le premier brûleur et à l'étape f) on récupère les fumées de combustion en sortie du premier réacteur de vaporeformage avant de les envoyer vers le second brûleur générant les fumées de combustion pour le second réacteur de vaporeformage.
- les fumées de combustion des étapes c), d) et e) correspondent à celles générées par le premier brûleur et à l'étape f) on récupère les fumées de combustion en sortie du premier réacteur de vaporeformage avant de les mélanger aux fumées de combustion générées par le second brûleur; ledit mélange étant ensuite introduit dans l'étage d' « apport de chaleur» du second réacteur de vaporeformage.
- le gaz de synthèse récupéré à l'étape g) comprend de l'hydrogène et du monoxyde de carbone et ledit procédé met en œuvre une unité de purification de l'hydrogène.
- l'unité de purification est une unité d'adsorption modulée en pression PSA
- le flux résiduaire sortant du PSA est recyclé pour la production des fumées de combustion.
- les réacteurs de vaporeformage sont des réacteurs millistructurés,
- les réacteurs de vaporeformage ne présentent pas d'interfaces d'assemblages entre les différents étages. Ces réacteurs de vaporeformage sont de préférence fabriqués par méthode de fabrication additive.

L'invention propose de nouvelles solutions pour diminuer la température d'entrée des fumées dans les échangeurs-réacteurs tout en apportant la chaleur nécessaire à la réaction endothermique de vaporeformage et à l'ensemble du procédé (production de la vapeur nécessaire au vaporeformage, préchauffe de la charge, du fuel, de l'eau etc...). Ces solutions se basent sur une configuration à au moins deux réacteurs de vaporeformage alimentés en parallèles vis-à-vis du mélange charge hydrocarbonée, vapeur et en série vis-à-vis des fumées qui servent à apporter une partie de la chaleur nécessaire à la réaction de vaporeformage. Afin de diminuer la température d'entrée des fumées dans les échangeurs-réacteurs, des fumées plus froides que les fumées de combustion issues en aval dans le procédé sont utilisées. Ces fumées « plus froides » sont obtenues après passage dans des échangeurs de chaleurs dédiés à la récupération de chaleur dans d'autres parties du procédé de vaporeformage (on peut notamment citer, les échangeurs de préchauffe du mélange charge hydrocarbonée et vapeur d'eau, les échangeurs de préchauffe de l'eau déminéralisée, les chaudières pour la génération de vapeur, etc...) Les fumées « plus froides » sont recyclées en aval du/des brûleur(s) en proportion judicieuse pour diluer les fumées chaudes issues de la combustion d'un mélange de gaz de purge de l'unité de purification, de fuel et d'air de combustion. Ainsi, il est proposé pour atteindre une température cible (inférieure à 1000°C) en entrée des échangeurs-réacteurs de travailler avec un mélange d'air de dilution et de fumées froides recyclées. Il est également possible de ne travailler qu'avec de l'air de dilution et sans fumées recyclées. Cet air de dilution est introduit en aval du/des brûleur(s) et n'est plus utilisé comme air de combustion, mais bien comme diluant pour diminuer la température des fumées. A l'inverse, suivant la teneur en oxygène de ces fumées, celles-ci peuvent également être utilisées comme comburant et éventuellement se substituer complètement à l'air de combustion dans les configurations avec deux brûleurs.

Enfin, la configuration la plus judicieuse consistera à utiliser une combinaison d'air de dilution et de recycle de fumées « plus froides » en conservant la mise en série des ensembles d'échangeurs-réacteurs vis-à-vis des fumées. Il est alors possible de travailler à une température de fumées plus basse sur les échangeurs-réacteurs et notamment inférieure à 1000°C tout en minimisant la consommation de fuel et la consommation énergétique.

Tout d'abord, l'intérêt d'avoir des fumées à plus basse température en entrée des réacteurs de reformage est de pouvoir utiliser un plus grand nombre de matériaux pour la fabrication des échangeurs-réacteurs et notamment des matériaux moins onéreux. Un gain significatif sur les coûts de fabrication des échangeurs-réacteurs peut être réalisé. D'autre part, la température maximale atteinte dans les échangeurs-réacteurs étant diminuée, les opportunités de conception des échangeurs-réacteurs sont plus importantes. En effet, les épaisseurs de matériaux peuvent être plus faibles pour la même tenue mécanique. D'autre part, la durée de vie de l'équipement en fonctionnement pourra être augmentée grâce à des conditions opératoires moins sévères. Enfin, il est possible avec l'utilisation d'un recycle de fumées « plus froides » de respecter des températures plus basses en entrée des réacteurs de reformage en minimisant la consommation énergétique et la consommation de fuel du procédé.

L'invention proposée est particulièrement adaptée aux échangeurs-réacteurs dédiés au vaporeformage. Dans une forme privilégiée de l'invention, les échangeurs-réacteurs mis en jeux présentent la même conception que celle précédemment décrite et présentent donc un étage "produits" dédié à la récupération de chaleur sur le gaz de synthèse et particulièrement adapté pour des vaporeformeurs destinés à travailler sans export de vapeur.

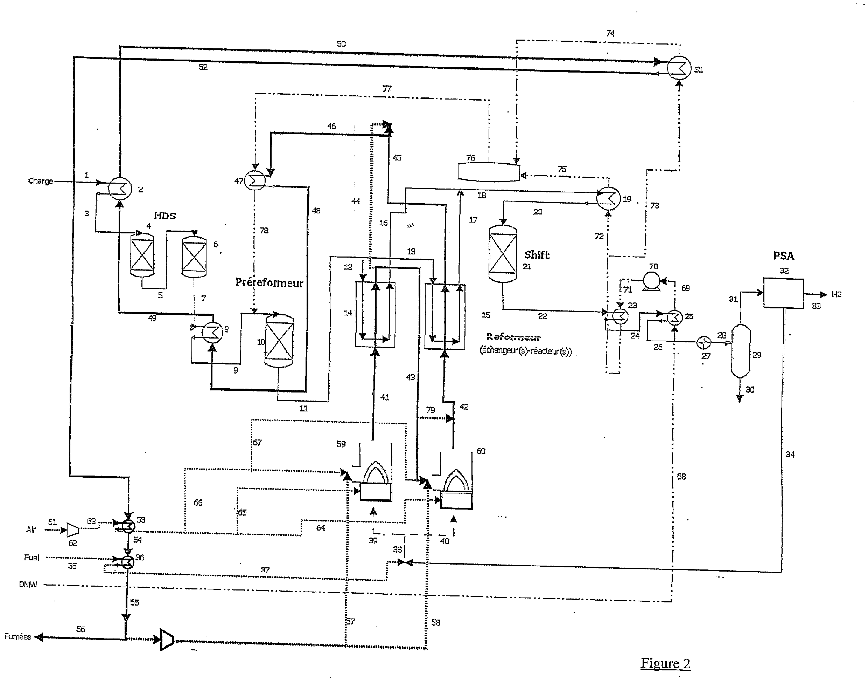

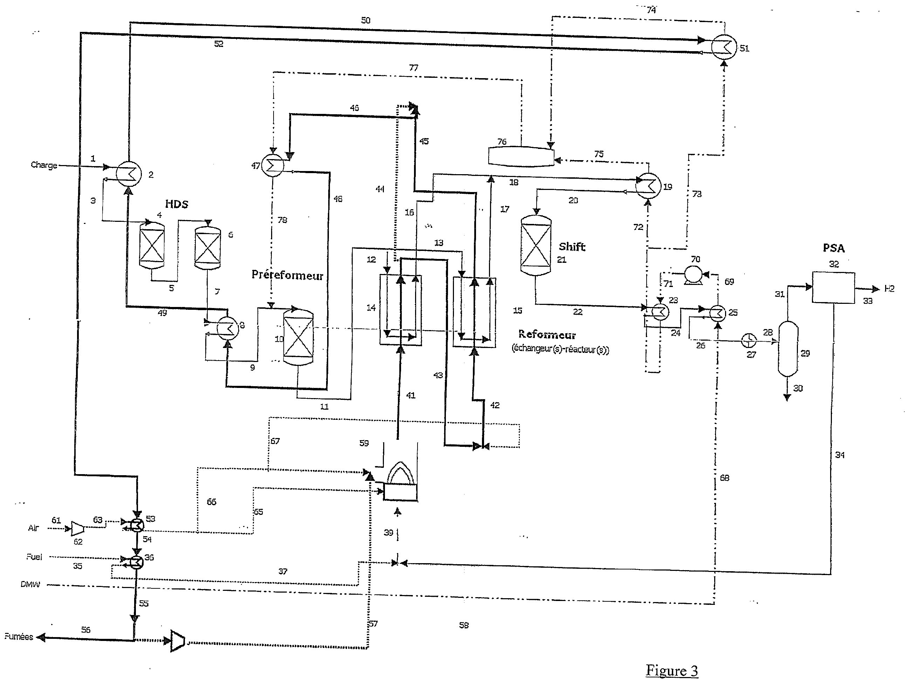

L'invention va à présent être décrite plus en détail à l'aide des figures 2 et 3.

Dans ces figures le vaporeformage s'effectue dans deux réacteurs de reformage (14) et (15). Deux sources de chaleurs sont utilisées :
- le gaz de synthèse (flux 16 et 17) chaud qui circule à contre-sens de la charge dans les réacteurs de vaporeformage,
- un fluide chaud, préférentiellement des fumées (flux 41 et 42) obtenues par combustion d'une charge combustible qui est utilisée comme source principale d'apport de chaleur à la réaction de vaporeformage.

Les réacteurs de vaporeformage sont alimentés l'un par rapport à l'autre en parallèle vis-à-vis de la charge (flux 11, 12 et 13) et en série vis-à-vis de tout ou partie des fumées (flux 41, 43 et (42)). Un ensemble de réacteurs de vaporeformage peut contenir un ou plusieurs réacteurs de vaporeformage en parallèles. Dans le cas où des fumées sont utilisées, celles-ci peuvent être générées par un ou deux brûleurs dédiés (le schéma correspondant à deux brûleurs est donné sur la Figure 2, le schéma à un seul brûleur est donné sur la Figure 3).

La température des fumées en entrée des réacteurs de vaporeformages (14) et (15) est limitée par la température limite d'utilisation des matériaux utilisés pour la fabrication en accord avec les conditions opératoires rencontrées. De même, cette température est imposée pour un matériau donné et pour des conditions opératoires fixées par le design du réacteur de vaporeformage (épaisseur de parois etc...).

La présente invention propose plusieurs solutions pour respecter cette température limite des fumées en entrée des échangeurs-réacteurs et apporter la chaleur nécessaire au procédé de vaporeformage. Cette invention propose notamment des solutions pour travailler avec des températures de fumées (flux 41 et 42) inférieures à 1000°C. Ainsi, on se propose d'introduire dans les brûleurs (59) et (60) en plus de l'air de combustion (64) et (65) des fumées « plus froides » que les fumées de combustion qui ont été refroidies dans d'autres parties du procédé. Les fumées « plus froides » recyclées au(x) brûleur(s) pourront y être introduites dans différentes proportions qui offriront différentes possibilités de fonctionnement exposées ci-après. La réaction de vaporeformage s'effectue dans les réacteurs de vaporeformage à une température comprise entre 700°C et 1000°C et une pression comprise entre 1 et 60 bar, préférentiellement entre 20 et 40 bar. Le gaz de synthèse sort des réacteurs de vaporeformage à une température comprise entre 400°C et 1000°C. Les fumées sortent également des réacteurs de vaporeformage à des températures comprises entre 450°C et 750°C.

Pour que la température des fumées obtenue en sortie des brûleurs soit directement compatible avec leur utilisation dans les réacteurs de vaporeformage (température inférieure à 1000°C), il est également possible d'ajouter de l'air de dilution. L'excès d'air peut alors être supérieur à 300% Cependant, il résulte de cette solution une consommation d'air très importante. Cette consommation va pouvoir être diminuée en utilisant comme diluant les fumées plus froides que les fumées de combustion qui ont été refroidies dans d'autres parties du procédé (flux 57 et 58). Ces fumées, suivant le type d'intégration thermique utilisé sont à une température comprise entre 300°C et 160°C. Elles peuvent donc être introduites en proportion variable aux brûleurs (59 et 60) avec ou sans air de dilution, de sorte que la température des fumées résultantes (flux 41 et 42) soit compatible avec les réacteurs de vaporeformage (14 et 15).

Les quantités d'air de dilution et/ou de fumées « plus froides » sont adaptées également pour obtenir après mélange des fumées (43) issues du premier réacteur de vaporeformage une température compatible pour les fumées (42) envoyées au second réacteur de vaporeformage (15). Il résulte de ceci que les quantités d'air de dilution et/ou de fumées « plus froides » recyclées utilisées entre les deux brûleurs peuvent différer. L'utilisation en série des fumées sortant du premier réacteur de vaporeformage (43) pour diluer les fumées les fumées entrant dans le second réacteur de vaporeformage (42) permet d'améliorer de diminuer la consommation d'énergie du procédé. Dans une solution avec un seul brûleur c'est la quantité de fumées envoyées au point de mélange avec les fumées sortant du premier réacteur de vaporeformage (14) qui sera adaptée pour obtenir en entrée du second réacteur de vaporeformage (15) la température cible. De ce fait, la quantité de fumées envoyées vers l'un ou l'autre des deux réacteurs de vaporeformage (14 et 15) pourra être différente dans une configuration avec un seul brûleur.

Enfin, suivant la teneur en oxygène des fumées « plus froides » ou des fumées issues du Premier réacteur de vaporeformage, celles-ci pourront remplacer l'air de combustion dans les brûleurs si bien qu'il est possible de diminuer la quantité d'air de combustion apportée aux brûleurs. Il est également possible par cette solution de fonctionner sans air de combustion sur l'un des brûleurs. Dans le cas où l'on souhaite fonctionner sans air de combustion ou avec une quantité plus faible, il sera nécessaire de s'assurer que la quantité d'oxygène apportée aux brûleurs respecte toujours la contrainte d'excès d'air d'au moins 8% par rapport à la quantité minimale requise pour la combustion complète de la charge combustible.

Les fumées sont générées par combustion du mélange d'une charge combustible (37) et des gaz de purge (34) issus du procédé de purification. En effet, pour répondre aux exigences de pureté sur l'hydrogène et pour maximiser la production d'hydrogène le gaz de synthèse peut subir des étapes supplémentaires de conversion (réaction de gaz à l'eau) et doit subir une étape ultime de purification. A l'issue de cette étape ultime de purification deux flux gazeux sont obtenus l'un riche en hydrogène et conforme aux exigences de pureté qui constitue le produit du procédé de vaporeformage, l'autre contenant les gaz résiduaires du procédés et popuvant être réutilisé de manière judicieuse comme combustible.. Les gaz de purge (34) provenant du PSA peuvent être utilisés en quantité variable pour la génération des fumées. Préférentiellement tous les gaz de purge du PSA sont envoyés à la combustion. La charge combustible (35) peut être introduite en proportion variable pour les besoins du procédé.

Pour assurer la combustion du mélange des gaz de purge du PSA et de la charge de combustible, de l'air de combustion est également envoyé aux brûleurs (flux 64 et 65). La quantité d'air de combustion qui est envoyé aux brûleurs est ajustée afin d'assurer la combustion complète du mélange de combustibles. Cet air est introduit préférentiellement avec un léger excès de sorte que l'oxygène envoyé aux brûleurs soit en excès d'au moins 8% par rapport à la quantité minimale nécessaire à la combustion complète du carburant. Comme expliqué précédemment, il est également possible de remplacer l'air de combustion par des fumées recyclées à condition que celles-ci apportent une quantité d' oxygène suffisante pour assurer un excès d'oxygène d'au moins 8%. La température des fumées résultant de cette simple combustion est trop élevée pour pouvoir utiliser les fumées directement dans les réacteurs de vaporeformage.

Cette température peut être proche de la température adiabatique de flamme et excède facilement les 1400°C. C'est pourquoi il est nécessaire comme expliqué précédemment d'ajouter de l'air de dilution et/ou des fumées froides recyclées au(x) brûleur(s) pour pouvoir diminuer la température des fumées envoyées aux échangeurs-réacteurs.

Les deux réacteurs de vaporeformage sont en parallèles vis-à-vis de la charge (flux 12 et 13) et du gaz de synthèse produit (flux 16 et 17). Ils sont alimentés par des fumées chaudes (flux 41 et 42) générées par un ou deux brûleurs dédiés (59 et 60). Tout ou partie des fumées sortant du premier réacteur de vaporeformage (14) est envoyée soit au second brûleur (60) dédié à la génération des fumées pour le second réacteur de vaporeformage (15), soit mélangée directement aux fumées (79) obtenues sur le second brûleur. Le reste des fumées est directement mélangé aux fumées (45) sortant du second réacteur de vaporeformage.

Préférentiellement, toutes les fumées issues du premier réacteur de vaporeformage sont envoyées vers les fumées du second réacteur de vaporeformage, soit par le biais d'un mélange dans le second brûleur (60) soit par un mélange avec les fumées (42) issues du second brûleur. La température des fumées sortant du premier réacteur peut varier entre 450°C et 750°C.

Si un seul brûleur est utilisé tout ou partie des fumées issues du premier réacteur de vaporeformage (14) sera envoyée directement vers les fumées (42) destinées au second réacteur de vaporeformage, le reste étant envoyé vers les fumées (45) sortant du second réacteur de vaporeformage.

Préférentiellement, toutes les fumées issues du premier réacteur de vaporeformage seront envoyées vers les fumées du second réacteur de vaporeformage et donc mélangées au flux (42).

Le reste du procédé correspond à un procédé classique de vaporeformage.

## Revendications

1. Procédé de production de gaz de synthèse mettant en œuvre au moins un premier et un second réacteurs de vaporeformage formés chacun d'un assemblage d'étages constituées de canaux millimétriques et comprenant chacun au moins un étage constitué de canaux millimétriques de « réaction » permettant la circulation d'un mélange réactionnel et au moins un étage constitué de canaux millimétriques d' « apport de chaleur » permettant la circulation d'un fluide caloporteur, comprenant les étapes suivantes :
a) mélanger un gaz de charge d'hydrocarbures et de la vapeur d'eau de manière à former le mélange réactionnel,
b) alimenter en parallèle les étages de réaction du premier et du second réacteur de vaporeformage avec le mélange réactionnel obtenu à l'étape a),
c) produire des fumées de combustion ayant une température supérieure à 1000°C et pouvant être utilisées comme fluide caloporteur au sein des réacteurs de vaporeformage,d) refroidir les fumées de combustion issues de l'étape c) à une température inférieure à 1000°C,
e) introduire les fumées de combustion issues de l'étape d) dans l'étage d' « apport de chaleur » du premier réacteur de vaporeformage,
f) récupérer les fumées de combustion en sortie du premier réacteur de vaporeformage et les introduire dans l'étage d' « apport de chaleur » du second réacteur de vaporeformage, et
g) récupérer en sortie du premier et du second réacteur de vaporeformage du gaz de synthèse.

2. Procédé selon la revendication 1, **caractérisé en ce qu'**à l'étape d) les fumées de combustion sont refroidies à une température inférieure à 900°C.

3. Procédé selon la revendication 1, **caractérisé en ce qu'**à l'étape d) les fumées de combustion sont refroidies par dilution avec des fumées plus froides que les fumées de combustion récupérées en aval du au moins premier réacteur de vaporeformage et /ou avec de l'air de dilution.

4. Procédé selon la revendication 2, **caractérisé en ce que** les fumées plus froides que les fumées de combustion ont subi un refroidissement par production de vapeur.

5. Procédé selon la revendication 2, **caractérisé en ce qu'**à l'étape d) le refroidissement des fumées de combustion s'effectue par dilution de 0 à 80 % avec des fumées plus froides que les fumées de combustion récupérées en aval du au moins premier réacteur de vaporeformage et de 0 à 80 % avec de l'air de dilution.

6. Procédé selon l'une des revendications 1 à 4, **caractérisé en ce qu'**à l'étape c) les fumées de combustion sont produites au moyen d'au moins un brûleur.

7. Procédé selon la revendication 5, **caractérisé en ce qu'**à l'étape c) les fumées de combustion sont produites au moyen un premier et un second brûleurs, le premier brûleur générant les fumées de combustion pour le premier réacteur de vaporeformage et le second brûleur générant les fumées de combustion pour le second réacteur de vaporeformage.

8. Procédé selon la revendication 6, **caractérisé en ce que** les fumées de combustion des étapes c), d) et e) correspondent à celles générées par le premier brûleur et à l'étape f) on récupère les fumées de combustion en sortie du premier réacteur de vaporeformage avant de les envoyer vers le second brûleur générant les fumées de combustion pour le second réacteur de vaporeformage.

9. Procédé selon la revendication 6, **caractérisé en ce que** les fumées de combustion des étapes c), d) et e) correspondent à celles générées par le premier brûleur et à l'étape f) on récupère les fumées de combustion en sortie du premier réacteur de vaporeformage avant de les mélanger aux fumées de combustion générées par le second brûleur; ledit mélange étant ensuite introduit dans l'étage d' « apport de chaleur » du second réacteur de vaporeformage.

10. Procédé selon l'une des revendications 1 à 8, **caractérisé en ce que** le premier et le second réacteur de vaporeformage sont choisis parmi les réacteurs multitubulaire, les réacteurs à plaque et ondes, et les réacteurs à plaques et canaux.

11. Procédé selon l'une des revendications 1 à 9, **caractérisé en ce que** le gaz de synthèse récupéré à l'étape g) comprend de l'hydrogène et du monoxyde de carbone et ledit procédé met en œuvre une unité de purification de l'hydrogène.

12. Procédé selon la revendication 10, **caractérisé en ce que** l'unité de purification est une unité d'adsorption modulée en pression PSA.

13. Procédé selon la revendication 11, **caractérisé en ce que** le flux résiduaire sortant du PSA est recyclé pour la production des fumées de combustion.

14. Procédé selon l'une des revendications 1 à 12, **caractérisé en ce que** les réacteurs de vaporeformage sont des réacteurs millistructurés.

15. Procédé selon la revendication 13, **caractérisé en ce que** les réacteurs de vaporeformage ne présentent pas d'interfaces d'assemblages entre les différents étages.

16. Procédé selon la revendication 14, **caractérisé en ce que** les réacteurs de vaporeformage sont fabriqués par méthode de fabrication additive.

## Patentansprüche

1. Verfahren zur Herstellung von Synthesegas, das mindestens einen ersten und einen zweiten Dampfreformierungsreaktor einsetzt, die jeweils aus einer Zusammensetzung von Stufen gebildet werden, die aus millimetrischen Kanälen gebildet sind und jeweils mindestens eine Stufe, die aus milimetrischen "Reaktionskanälen" gebildet wird, die die Zirkulation eines Reaktionsgemisches ermöglichen und mindestens eine Stufe umfassen, die aus millimetrischen Kanälen zur "Wärmezufuhr" gebildet wird, die die Zirkulation eines Wärmeträgerfluids ermöglichen, die folgenden Schritte umfassend:
a) Mischen eines Kohlenwasserstoffladegases und Wasserdampf, um das Reaktionsgemisch zu bilden,
b) paralleles Versorgen der Reaktionsstufen des ersten und zweiten Dampfreformierungsreaktors mit dem im Schritt a) erhaltenen Reaktionsgemisch,
c) Herstellen der Verbrennungsrauchgase, die eine Temperatur von mehr als 1000 °C aufweisen, und die als Wärmeträgerfluid innerhalb des Dampfreformierungsreaktors verwendet werden können,
d) Kühlen der Verbrennungsrauchgase aus dem Schritt c) auf eine Temperatur unter 1000 °C,
e) Einbringen der Verbrennungsrauchgase, die aus dem Schritt d) stammen, in die Stufe zur "Wärmezufuhr" des ersten Dampfreformierungsreaktors,
f) Wiedergewinnen der Verbrennungsrauchgase am Ausgang des ersten Dampfreformierungsreaktors und Einbringen in die Stufe zur "Wärmezufuhr" des zweiten Dampfreformierungsreaktors, und
g) Wiedergewinnen des Synthesegases am Ausgang des ersten und des zweiten Dampfreformierungsreaktors.

2. Verfahren nach Anspruch 1, **dadurch gekennzeichnet, dass** im Schritt d) die Verbrennungsrauchgase auf eine Temperatur unter 900 °C gekühlt werden.

3. Verfahren nach Anspruch 1, **dadurch gekennzeichnet, dass** im Schritt d) die Verbrennungsrauchgase durch Verdünnung mit kälteren Rauchgasen als den stromabwärts des mindestens ersten Dampfreformierungsreaktors wiedergewonnenen Verbrennungsgasen und/ oder mit Verdünnungsluft gekühlt werden.

4. Verfahren nach Anspruch 2, **dadurch gekennzeichnet, dass** die kälteren Rauchgase als die Verbrennungsrauchgase eine Kühlung durch Dampferzeugung erfahren haben.

5. Verfahren nach Anspruch 2, **dadurch gekennzeichnet, dass** im Schritt d) die Kühlung der Verbrennungsrauchgase durch Verdünnung von 0 bis 80 % mit kälteren Rauchgasen als den stromabwärts des mindestens ersten Dampfreformierungsreaktors wiedergewonnenen Verbrennungsgasen und von 0 bis 80% mit Verdünnungsluft durchgeführt wird.

6. Verfahren nach einem der Ansprüche 1 bis 4, **dadurch gekennzeichnet, dass** im Schritt c) die Verbrennungsrauchgase anhand mindestens eines Brenners erzeugt werden.

7. Verfahren nach Anspruch 5, **dadurch gekennzeichnet, dass** im Schritt c) die Verbrennungsrauchgase anhand eines ersten und eines zweiten Brenners erzeugt werden, wobei der erste Brenner die Verbrennungsrauchgase für den ersten Dampfreformierungsreaktor erzeugt, und der zweite Brenner die Verbrennungsrauchgase für den zweiten Dampfreformierungsreaktor erzeugt.

8. Verfahren nach Anspruch 6, **dadurch gekennzeichnet, dass** die Verbrennungsrauchgase der Schritte c), d) und e) jenen entsprechen, die durch den ersten Brenner erzeugt werden, und im Schritt f) die Verbrennungsrauchgase am Ausgang des ersten Dampfreformierungsreaktors wiedergewonnen werden, bevor sie zum zweiten Brenner geschickt werden, der die Verbrennungsrauchgase für den zweiten Dampfreformierungsreaktor erzeugt.

9. Verfahren nach Anspruch 6, **dadurch gekennzeichnet, dass** die Verbrennungsrauchgase der Schritte c), d) und e) jenen entsprechen, die durch den ersten Brenner erzeugt werden, und im Schritt f) die Verbrennungsrauchgase am Ausgang des ersten Dampfreformierungsreaktors wiedergewonnen werden, bevor sie mit den Verbrennungsrauchgasen, die durch den zweiten Brenner erzeugt werden, gemischt werden; wobei das Gemisch danach in die Stufe zur "Wärmezufuhr" des zweiten Dampfreformierungsreaktors eingebracht wird.

10. Verfahren nach einem der Ansprüche 1 bis 8, **dadurch gekennzeichnet, dass** der erste und zweite Dampfreformierungsreaktor aus Rohrbündelreaktoren, Platten- und Wellenreaktoren und Platten- und Kanalreaktoren ausgewählt sind.

11. Verfahren nach einem der Ansprüche 1 bis 9, **dadurch gekennzeichnet, dass** das im Schritt g) wiedergewonnene Synthesegas Wasserstoff und Kohlenmonoxyd umfasst, und das Verfahren eine Wasserstoffreinigungseinheit einsetzt.

12. Verfahren nach Anspruch 10, **dadurch gekennzeichnet, dass** die Reinigungseinheit eine in PSA-Druck modulierte Adsorptionseinheit ist.

13. Verfahren nach Anspruch 11, **dadurch gekennzeichnet, dass** die aus der PSA austretende Restströmung für die Herstellung der Verbrennungsrauchgase wiederverwendet wird.

14. Verfahren nach einem der Ansprüche 1 bis 12, **dadurch gekennzeichnet, dass** die Dampfreformierungsreaktoren millistrukturierte Reaktoren sind.

15. Verfahren nach Anspruch 13, **dadurch gekennzeichnet, dass** die Dampfreformierungsreaktoren keine Aufbauschnittstellen zwischen den verschiedenen Stufen aufweisen.

16. Verfahren nach Anspruch 14, **dadurch gekennzeichnet, dass** die Dampfreformierungsreaktoren durch additive Fertigungsmethode gefertigt werden.

## Claims

1. Method for producing synthesis gas implementing at least one first and one second steam reforming reactors, each formed of an assembly of stages constituted of millimetric channels and each comprising at least one stage constituted of millimetric "reaction" channels making it possible for the circulation of a reactional mixture and at least one stage constituted of millimetric "heat input" channels making it possible for the circulation of a heat-transfer fluid, comprising the following steps:
a) mixing a hydrocarbon charge gas and water vapour so as to form the reactional mixture,
b) providing in parallel the reaction stages of the first and of the second steam reforming reactor with the reactional mixture obtained in step a),
c) producing combustion fumes having a temperature greater than 1000°C and could be used as a heat-transfer fluid within steam reforming reactors,
d) cooling the combustion fumes from step c) at a temperature less than 1000°C,
e) introducing the combustion fumes from step d) in the "heat input" stage of the first steam reforming reactor,
f) recovering the combustion fumes at the outlet of the first steam reforming reactor and introducing them in the "heat transfer" stage of the second steam reforming reactor, and
g) recovering, at the outlet of the first and of the second steam reforming reactor of the synthesis gas.

2. Method according to claim 1, **characterised in that** in step d), the combustion fumes are cooled to a temperature less than 900°C.

3. Method according to claim 1, **characterised in that** in step d), the combustion fumes are cooled by dilution with fumes which are colder than the combustion fumes recovered downstream from the at least first steam reforming reactor and/or with the dilution air.

4. Method according to claim 2, **characterised in that** the fumes which are colder than the combustion fumes have undergone a cooling by producing steam.

5. Method according to claim 2, **characterised in that** in step d), the cooling of the combustion fumes is achieved by dilution of 0 to 80% with fumes which are colder than the combustion fumes recovered downstream from at least the first steam reforming reactor and 0 to 80% with the dilution air.

6. Method according to one of claims 1 to 4, **characterised in that** in step c), the combustion fumes are produced by means of at least one burner.

7. Method according to claim 5, **characterised in that** in step c), the combustion fumes are produced by means of a first and second burner, the first burner generating the combustion fumes for the first steam reforming reactor and the second burner generating the combustion fumes for the second steam reforming reactor.

8. Method according to claim 6, **characterised in that** the combustion fumes of steps c), d) and e) correspond to those generated by the first burner and in step f), the combustion fumes are recovered at the outlet of the first steam reforming reactor before sending them to the second burner generating the combustion fumes for the second steam reforming reactor.

9. Method according to claim 6, **characterised in that** the combustion fumes of steps c), d) and e) correspond to those generated by the first burner and in step f), the combustion fumes are recovered at the outlet of the first steam reforming reactor before mixing them with the combustion fumes generated by the second burner; said mixture then being introduced in the "heat input" stage of the second steam reforming reactor.

10. Method according to one of claims 1 to 8, **characterised in that** the first and the second steam reforming reactor are selected from among multitube reactors, plate and wave reactors, and plate and channel reactors.

11. Method according to one of claims 1 to 9, **characterised in that** the synthesis gas recovered in step g) comprises hydrogen and carbon monoxide and said method implements a unit for purifying the hydrogen.

12. Method according to claim 10, **characterised in that** the purification unit is a PSA pressure modulated adsorption unit.

13. Method according to claim 11, **characterised in that** the residual stream exiting the PSA is recycled to produce combustion fumes.

14. Method according to one of claims 1 to 12, **characterised in that** the steam reforming reactors are millistructured reactors.

15. Method according to claim 13, **characterised in that** the steam reforming reactors do not have any assembly interfaces between the different stages.

16. Method according to claim 14, **characterised in that** the steam reforming reactors are manufactured by the additive manufacturing method.
